# EUROPÄISCHE PATENTSCHRIFT

(11) **EP 1 743 438 B1**
(45) Veröffentlichungstag und Bekanntmachung des Hinweises auf die Patenterteilung: **03.06.2009**
(21) Anmeldenummer: 05749764.6
(22) Anmeldetag: 28.04.2005
(51) Int. Cl.: H04B 7/02

(54) **VERFAHREN ZUM EMPFANGEN VON IN EINER FOLGE GESENDETEN DATEN IN EINEM MOBILFUNKSYSTEM MIT EMPFANGSLÜCKEN**
METHOD FOR RECEIVING DATA SENT IN A SEQUENCE IN A MOBILE TELEPHONY SYSTEM WITH RADIOPOCKETS
PROCEDE DE RECEPTION DE DONNEES ENVOYEES SOUS FORME DE SEQUENCE, COMPORTANT DES TROUS DE RECEPTION, DANS UN SYSTEME DE TELEPHONIE MOBILE

(30) Priorität: 05.05.2004 DE 102004022146; 18.06.2004 DE 102004029444
(43) Veröffentlichungstag der Anmeldung: 17.01.2007
(73) Patentinhaber: SIEMENS AKTIENGESELLSCHAFT, 80333 München (DE)
(72) Erfinder: HINDELANG, Thomas, 82256 Fürstenfeldbruck (DE); MICHEL, Jürgen, 81737 München (DE); RAAF, Bernhard, 82061 Neuried (DE)
(86) Internationale Anmeldenummer: PCT/EP2005/051944
(87) Internationale Veröffentlichungsnummer: WO 2005/109675

(56) Entgegenhaltungen:
- EP-A- 0 674 455
- EP-A- 1 039 658
- WO-A-95/06365
- DE-A1- 19 949 610

## Beschreibung

Die Erfindung bezieht sich auf ein Verfahren zum Empfangen von in einer Folge gesendeten Daten in einem Mobilfunksystem mit Empfangslücken gemäß den oberbegrifflichen Merkmalen des Patentanspruchs 1, auf ein Verfahren zum Senden von einer Folge von Daten von einem Sender zu zumindest einem Empfänger in einem solchen Mobilfunksystem, auf einen Empfänger mit den oberbegrifflichen Merkmalen des Patentanspruchs 14 bzw. auf ein Kommunikationssystem mit zumindest zwei Sendern gemäß den oberbegrifflichen Merkmalen des Patentanspruchs 15.

In einem Mobilfunksystem, beispielsweise gemäß dem Standard Universal Mobile Telecommunication System (UMTS) werden Kommunikationsverbindungen über Funkschnittstellen zwischen mobilen Teilnehmerstationen (UE: User Equipment) und stationären Basisstationen (Node B) aufgebaut. Um die Mobilität einer Teilnehmerstation zu unterstützen, muss die Teilnehmerstation kontinuierlich Messungen hinsichtlich eines möglichen Übergangs (handover) zu einer anderen Basisstation durchführen. Diese Messungen werden sowohl in einem Ruhezustand (idle) als auch in einem Verbindungszustand (connected mode) durchgeführt. Daher wurde in UMTS in der Betriebsart FDD (Frequency Division Duplex) eine sogenannte komprimierte Betriebsart (Compressed mode/CM) eingeführt, um einer Teilnehmerstation Zwischenfrequenz-(inter frequency) und Zwischen-Funkzugriffstechnologie-(Radio Access Technology/RAT) Messungen auch während einer bestehenden Verbindung zu einem zugewiesenen Kanal (Dedicated Channel/DCH) auch ohne eine zweite Empfangseinrichtung zu ermöglichen. Mit nur einer Empfangseinrichtung kann die Teilnehmerstation während einer bestehenden Verbindung z.B. Handover-Messungen zu einem GSM-Funkzugriffsnetz (GSM: Global System for Mobile Telecommunication) durchführen. Gemäß der momentanen Spezifikation können durch das Netz verschiedene Typen komprimierter Betriebsarten konfiguriert werden. Die erste Betriebsart wird als "Uplink (UL - Aufwärtsverbindung) nur im CM" bezeichnet. Diese Betriebsart für eine Aufwärtsverbindung nur im komprimierten Modus ist beispielsweise vorteilhaft, wenn ein Terminal bzw. eine Teilnehmerstation mit einer zweiten Empfangseinrichtung ausgestattet ist, diese Teilnehmerstation aber Messungen in beispielsweise dem GSM 1800-Frequenzband nahe dem UMTS-Frequenzband, auf dem eine bestehende Verbindung mit der ersten Empfangseinrichtung gehalten wird, durchführen muss. In einem solchen Fall würde eine kontinuierliche Übertragung der Teilnehmerstation auf einem zugewiesenen UMTS-Kanal (UE UMTS DCH Transmission) mit den GSM-Messungen, welche mit der zweiten Empfangseinrichtung durchgeführt werden, stark interferieren.

Eine zweite Betriebsart wird in der komprimierten Betriebsart für Aufwärts- und Abwärtsverbindungen verwendet und als UL/DL CM (DL: Downlink) bezeichnet. Diese Betriebsart wird verwendet, um das Erfordernis einer zweiten Empfangseinrichtung in der Teilnehmerstation und auch eines zweiten Synthesizers vermeiden zu können. Die dritte Betriebsart für Abwärtsverbindungen nur in komprimierter Betriebsart, die als "DL nur im CM" bezeichnet wird, kann angewendet werden, falls eine einzelne Empfangsstation mit zwei Synthesizern verwendet wird, um beispielsweise RAT-Zwischenmessungen im GSM 900-Frequenzband (GSM 900 Inter RAT Measurements) durchzuführen.

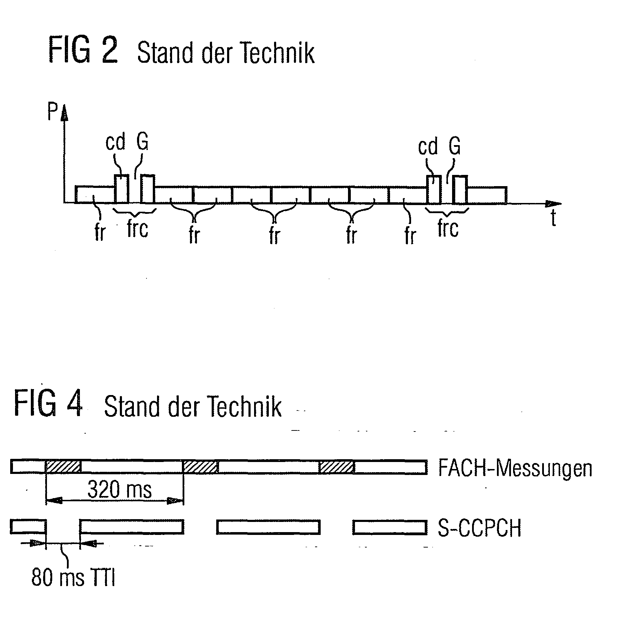

Fig. 2 stellt das Prinzip der komprimierten Betriebsart dar. Daten werden über eine Vielzahl von Rahmen fr (frame) übertragen, wobei derzeit zwischen einem und maximal sieben Schlitzen pro Rahmen fr durch die Teilnehmerstation zum Durchführen der Messungen belegt werden können. Diese Zeitschlitze können sich entweder in der Mitte des einzelnen Rahmens fr befinden oder über zwei Rahmen fr verteilt sein. Die Sendeleistung P wird in dem komprimierten Rahmen frc erhöht und dadurch die Verbindungsqualität konstant gehalten. Ein solcher komprimierter Rahmen besteht somit aus komprimierten Daten cd und einer Lücke G. Während der Lücke G kann die Teilnehmerstation eine Messung auf anderen Ressourcen, insbesondere anderen Frequenzen durchführen. Welche der Rahmen fr, frc komprimiert werden, wird durch das Netz bzw. Kommunikationssystem entschieden. Komprimierte Rahmen frc können periodisch oder auch auf Anforderung festgelegt werden. Die Rate und der Typ der komprimierten Rahmen frc sind variabel und hängen z. B. von der Art der durch die Teilnehmerstation durchzuführenden Messungen ab. Die Struktur der komprimierten Betriebsart wird einer bestimmten Teilnehmerstation zugewiesen, wobei die Strukturen im allgemeinen zwischen verschiedenen einer Vielzahl von Teilnehmerstationen innerhalb einer Zelle verschieden sind. Bei der komprimierten Betriebsart werden somit Daten über Rahmen fr übertragen, wobei ein Teil dieser Rahmen frc als komprimierte Rahmen frc Übertragungslücken G aufweist, in denen keine Daten gesendet werden.

Außerdem vorgesehen sind für ein solches Kommunikationssystem Multimedia-Rundfunkübertragungen und sogenannte Multicast-Dienste (MBMS: Multimedia Broadcast and Multicast Service), wobei es sich um einen Dienst handelt, bei dem die Basisstationen Informationen von allgemeinem Interesse auf einem gemeinsam verwendeten Kanal übertragen. Dieser gemeinsam verwendete Kanal wird von mehreren Teilnehmerstationen abgehört. Die allgemeine Information kann beispielsweise ähnlich zum Videotext im Fernsehen oder dem Inhalt sein, der über DAB (Digital Audio Broadcasting) übertragen wird, aber auch Dienste wie Multimedia einschließt. Beispielsweise können über einen solchen Dienst Tore eines Fußballspiels an eine Vielzahl von Teilnehmerstationen über einen einzigen Kanal übertragen werden. Bei der Übertragung über diesen Kanal ist jedoch eine kontinuierliche Übertragung von Daten ohne Übertragungslücken geplant. Während der Zeit der Empfangslücken seitens der empfangenen Station werden seitens der sendenden Station bei MBMS keine entsprechenden Sendelücken vorgesehen, so dass ein Datenverlust während der Empfangslücken eintritt.

Mit der Einführung von MBMS für UMTS tritt somit das Problem auf, dass der physikalische Kanal (S-CCPCH), der für MBMS verwendet wird, die komprimierte Betriebsart (CM) nicht unterstützt. In den Fällen, in denen sich eine Teilnehmerstation in dem Zustand einer zugewiesenen Verbindung befindet, ist ersichtlich, dass in den Momenten, in denen die Teilnehmerstation Messungen im Fall einer komprimierten Betriebsart durchführt, Daten verloren gehen, welche zu dieser Zeit in dem entsprechenden S-CCPCH-Rahmen übertragen werden. Dies führt zu einem Verlust von MBMS-Daten, die über den Kanal S-CCPCH in kontinuierlicher Folge übertragen werden. Die Menge der verlorenen Daten hängt dabei von der Länge der Lücken, der Frequenz der Lücken und der Anzahl aktiver CM-Sequenzen in der Teilnehmerstation ab.

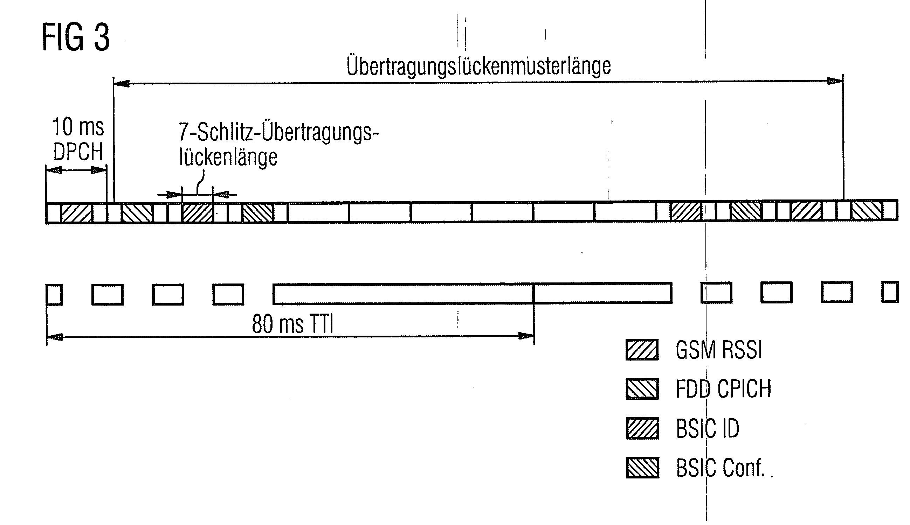

Fig. 3 zeigt ein Beispiel von Datenstrukturen, wie sie von einer Teilnehmerstation über eine zugewiesene Verbindung in der komprimierten Betriebsart über einen sogenannten DPCH-Kanal (DPCH: Dedicated Connection in CM) empfangen werden in der oberen Darstellung. Die untere Darstellung zeigt, welche Daten von der Teilnehmerstation als Empfänger in der Betriebsart mit Empfangslücken im Fall des Empfangs fortlaufender Daten über einen derartigen Rundfunkkanal S-CCPCH beim Empfang von MBMS empfangen bzw. nicht empfangen werden. Die Teilnehmerstation führt verschiedene Messungen durch, beispielsweise eine Messung der empfangenen Signalstärke von GSM-Signalen (GSM RSSI: Received Signal Strength Indicator). Weitere Messungen werden beispielsweise hinsichtlich eines Basisstations-Identifizierungs-Codes BSIC und hinsichtlich FDD-Zwischenfrequenzen durchgeführt. Ersichtlich ist, dass während dieser Messzeiten Daten auf dem Kanal S-CCPCH verloren gehen, falls die Teilnehmerstation nur eine einzige Empfängereinrichtung hat und daher die Empfangsfrequenz wechseln muss.

Ein ähnliches Problem entsteht, wenn sich eine Teilnehmerstation in einem vorwärts gerichteten Zugriffskanal-Zustand einer Zelle (Cell FACH (Forward Access Channel) state) befindet, in dem der Teilnehmerstation ein allgemein vorgegebener oder ein geteilt verwendeter Transportkanal in der Aufwärtsrichtung zugewiesen ist, beispielsweise der Direktzugriffskanal RACH (Random Access Channel), den die Teilnehmerstation zu beliebiger zeit für die zugriffsprozedur verwenden kann. Ein Charakteristikum des Zugriffs auf den FACH der Zelle besteht darin, dass die Position der Teilnehmerstation dem terrestrischen Funkzugriffsnetz von UMTS (UTRAN: UMTS Terrestrial Radio Access Network) auf Zellebene hinsichtlich der Zelle bekannt ist, in der die Teilnehmerstation zuletzt eine Zellaktualisierungsprozedur durchgeführt hat. In diesem Zustand ist der Teilnehmerstation kein fest zugewiesener Kanal zugewiesen und Messungen gemäß der komprimierten Betriebsart sind nicht erforderlich. Jedoch muss die Teilnehmerstation den FACH in Abwärtsrichtung kontinuierlich überwachen und Zwischenfrequenz- und Zwischen-RAT-Messungen sind periodisch durchzuführen. Die Dauer des Messverlaufs entspricht der Dauer des größten Übertragungszeitintervalls (TTI: Transmission Time Interval) auf dem für die Rundfunkmitteilungen bzw. MBMS verwendeten Kanal S-CCPCH, welche durch die Teilnehmerstation beobachtet werden kann, wobei die Messungsabläufe periodisch alle 2^{k} Übertragungszeitintervalle mit k = 1,2,3 für 80ms TTI gemäß derzeitiger Vorgaben stattfinden. Im Fall einer TTI-Dauer der Messung von 80ms als längster Dauer gibt es je nach Wahl von k Messperioden von 160ms, 320ms bzw. 640ms. Zur Verdeutlichung stellt Fig. 4 ein Beispiel einer Teilnehmerstation in dem sogenannten cell FACH state mit k = 2 dar. Alle 320ms kann die Teilnehmerstation den MBMS-Empfang auf dem entsprechenden Kanal S-CCPCH unterbrechen für den Fall, dass Zwischenfrequenz- und RAT-Messungen erforderlich sind.

Nachteilhaft bei allen Verfahren ist, dass eine Teilnehmerstation kontinuierlich und fortlaufend gesendete Daten auf einem Kanal S-CCPCH im Fall der komprimierten Betriebsart nur unvollständig empfangen kann. Derzeit erörtert werden verschiedene Ansätze zur Problemlösung. Ein Ansatz besteht darin, dass ein Sender mit Kenntnis der Lücken seitens der empfangenden Teilnehmerstation einfach die Übertragung von MBMS-Daten während dieser Zeiten unterbricht und eine diskontinuierliche Übertragung (DTX: Discontinuous Transmission) durchführt.

Ein anderer Ansatz besteht darin, dass empfängerseitig die Teilnehmerstation versucht, fehlende Daten zu rekonstruieren, beispielsweise durch eine Dekodierung unter Verwendung einer Vorwärts-Fehlerkorrektur (FEC: Forward Error Correction), z.B. mittels für sich bekannter Turbo-Dekodierungs- und Verschachtelungs- (Interleaving) Verfahren. Diese Ansätze sind jedoch problematisch, da die Messlücken verschiedener empfängerseitiger Teilnehmerstationen, die sich innerhalb einer Zelle befinden und MBMS-Daten empfangen, zeitlich zueinander nicht ausgerichtet sind. Die entsprechenden Strukturen der Lücken sind messspezifisch, d.h. abhängig von der Art der Messung, welche durch eine Teilnehmerstation durchzuführen ist, also beispielsweise Zwischenfrequenz- oder Zwischen-RAT-Messungen, wobei dies beispielsweise auch von der Position der Teilnehmerstation innerhalb der zelle-abhängt.

Der momentan bevorzugte Ansatz besteht darin, dass Zwischenfrequenz- oder Zwischen-RAT-Messungen durch die Teilnehmerstation während eines MBMS-Empfangs unter Einsatz eines diskontinuierlichen Empfangs (DRX: Discontinuous Reception) durchgeführt wird. In diesem Fall werden die MBMS-Daten ohne eine Unterbrechung gesendet und übertragen, wobei eine einzelne empfangende Teilnehmerstation die MBMS-Daten, welche während der Durchführung von Interfrequenz- und Inter-RAT-Messungen nicht empfangen wurden, einfach verliert. Durch die Verwendung einer Vorwärts-Fehlerkorrektur müsste die Teilnehmerstation versuchen, die fehlenden Daten zu rekonstruieren.

In der DE 199 49 610 ist in einem Mobilfunknetz vorgesehen, bei der Übertragung von Information die Informationen eines jeweils komprimierten Rahmens während eines Soft-Handovers zu übertragen, wobei die Informationen des komprimierten Rahmens auf mehrere an dem Soft- Handover- Vorgang beteiligte Basisstationen aufgeteilt und von diesen unabhängig voneinander an eine Mobilstation übertragen werden.

Aus der WO 95/06365 A ist ein Antennensystem bekannt, bei dem mindestens zwei Antennen für eine Time Diversity Übertragung vorgesehen sind, wobei jede Antenne einen Diversity-Pfad liefert, bei dem die Informationsströme mit einer unterschiedlichen Zeitverzögerung zu den Informationsströmen der Basisstation gesendet werden. Empfangsseitig werden die empfangenen Informationsströme synchronisiert und die Addition der Informationsströme wird durch eine Multiplikation der Informationsströme mit einer Anzahl bewirkt, die mit der relativen Signalstärke der jeweiligen Informationsströme korrespondiert.

In der EP 1 039 658 A ist ein Verfahren beschrieben, bei dem in einem CDMA- Empfänger mehrere Signale von Sendern empfangen werden und ermittelt wird, bei welchen Signalen der Sender Diversity- Verfahren benutzt. Anschließend wird die Signalstärke jedes der empfangenen Signale berechnet und in Abhängigkeit von den ermittelten Signalen und berechneten Signalstärkenwird ein Signal eines Senders ausgewählt.

Die Aufgabe der Erfindung besteht darin, ein alternatives und vorzugsweise verbessertes Verfahren zum Empfang einer Folge gesendeter Daten bei Empfangslücken beim Empfangen vorzuschlagen bzw. ein entsprechend geeignetes Verfahren zum Senden einer Folge von Daten, einen Empfänger und ein entsprechendes Kommunikationssystem vorzuschlagen.

Diese Aufgabe wird durch das Verfahren zum Empfangen von in einer Folge gesendeter Daten gemäß den Merkmalen des Patentanspruchs 1, durch ein Verfahren zum Senden einer Folge von Daten gemäß den Merkmalen des Patentanspruchs 2, durch einen Empfänger für ein Mobilfunksystem gemäß den Merkmalen des Patentanspruchs 14 bzw. Mobilfunksystemeinrichtungen gemäß den Merkmalen des Patentanspruchs 15 gelöst.

Bevorzugt wird demgemäß ein Verfahren zum Empfangen von in einer Folge von einem ersten Sender eines Mobilfunksystems auf einem ersten Ressourcenelement einer Ressource gesendeten Daten durch einen Empfänger, wobei beim Empfangen Empfangslücken entstehen und während der Empfangslücken nicht empfangene Daten durch den Empfänger rekonstruiert werden, wobei die von dem ersten Sender nicht empfangenen Daten zeitlich versetzt oder verwürfelt von einem zweiten Sender auf dem gleichen Ressourcenelement der Ressource zwischen den Empfangslücken empfangen und zum Rekonstruieren der Folge aus Daten verwendet werden.

Bevorzugt wird demgemäß alternativ oder in Kombination ein Verfahren zum Senden einer Folge von Daten von einem Sender zu zumindest einem Empfänger in einem Mobilfunksystem über ein Ressourcenelement einer Ressource, wobei das Mobilfunksystem einen zweiten Sender mit überlappendem Sendebereich zum Sendebereich des ersten Senders aufweist, wobei die Daten auf dem selben Ressourcenelement von dem zweiten Sender mit einem Versatz zeitlich versetzt oder verwürfelt zu deren Aussenden über den ersten Sender derart durchgeführt wird, dass empfängerseitig durch bein Empfang der Daten (a - e) von dem ersten Sender (B1) entstandene Empfangslücken (G) nicht empfangene Daten (b) zwischen den Empfangslücken empfangen und rekonstruiert werden können.

Bevorzugt wird demgemäß ein Empfänger für ein Mobilfunksystem mit einer Empfängereinrichtung zum Empfangen einer Folge von Daten eines Senders auf einem Ressourcenelement einer Ressource, wobei die Empfängereinrichtung zeitweilig den Empfang auf dem Ressourcenelement zum zeitweiligen Wechsel des Ressourcenelements unterbricht, wodurch Empfangslücken entstehen, wobei während einer Empfangslücken nicht empfangene Daten zeitlich versetzt von einem zweiten Sender empfangen und zum Rekonstruieren der Folge von Daten verarbeitet werden.

Bevorzugt werden demgemäß Mobilfunksystemeinrichtungen eines Mobilfunksystems mit zumindest zwei Sendern mit zumindest teilweise überlappenden Sendebereichen, wobei die Sender eine Folge von Daten aussenden, wobei die Sender ausgestaltet sind, zum Aussenden der Daten jeweils das gleiche Ressourcenelement einer Ressource zu verwenden, wobei der eine Sende der Sender ausgestaltet ist, einzelne Datenelemente oder Datenblöcke der Daten jeweils versetzt zu einem entsprechenden Datenelement oder Datenblock auf bzw. im Vergleich zu dem anderen Sender auszusenden, wodurch empfängerseitig durch beim Empfang der Daten (a - e) von dem ersten Sender (B1) entstandene Empfangslücken (G) nicht empfangene Daten (b) zwischen den Empfangslücken empfangen und rekonstruiert werden können.

Vorteilhafte Ausgestaltungen sind Gegenstand abhängiger Ansprüche.

Bevorzugt wird insbesondere ein Verfahren, bei dem als das Ressourcenelement eine Sende- und Empfangsfrequenz verwendet wird, insbesondere eine Frequenz eines FDD- oder FDMA-Mobilfunksystems.

Bevorzugt wird insbesondere ein Verfahren, bei dem empfängerseitig die Empfangslücken durch einen zeitweiligen Wechsel des Ressourcenelements zu einem anderen Ressourcenelement der Ressource entstehen.

Übertragbar ist ein solcher Ansatz auch auf andere Datenausfälle, beispielsweise wenn einzelne Daten einer Folge von Daten durch Störungen nicht empfangen werden können, wie beispielsweise im Fall einer zweiten Empfängereinrichtung und aktiven Messungen in einem nahen Frequenzband mit zu hoher Störwirkung. Auch im Fall externer Störungen durch eine externe Störquelle ist das Verfahren umsetzbar.

Bevorzugt wird insbesondere ein Verfahren, bei dem das Mobilfunksystem ein Kommunikationssystem mit dem Ressourcenelement zum Senden der Folge von Daten über eine Zeitdauer ist und der zumindest eine Empfänger den Empfang während der Zeitdauer zeitweilig für einen Empfang auf einem anderen Ressourcenelement unterbricht und die Empfangslücken dadurch verursacht.

Bevorzugt wird insbesondere ein Verfahren, bei dem die Reihenfolge der Daten insbesondere Datenblöcke beim Aussenden durch den zweiten Sender gegenüber der Reihenfolge der Daten beim Aussenden über den ersten Sender jeweils innerhalb von Datenblöcken mit einer begrenzten Anzahl von Elementen vertauscht wird. Ein solches Vertauschen, d. h. eine Permutation kann in Teilbereuchen zyklisch oder zufällig durchgeführt werden.

Falls die Sender synchronisiert sind, z.B. innerhalb der Sektoren einer Zelle, so verhindert eine einfache zyklische Vertauschung von möglichst kleinen Teildatenbereichen, dass zu keiner Zeit von mehreren Sendern die gleichen Daten übertragen werden und außerdem ist der für die Umsortierung der Daten in der Empfangseinrichtung benötigte Speicher gering. Außerdem sofern Datenpakete mit Paketnummern zur Identifizierung der Reihenfolge vorhanden sind, kann eine einfach Umordnung vorgenommen werden. Werden lediglich zeitliche Verschiebungen mit gleichbleibender Reihenfolge der einzelnen Datenelemente vorgenommen, so kann zum vergleichen unter Herausfinden eines entsprechenden Datenelements auch eine Kreuzkorrelation zwischen der mit fehlendem Datenelement empfangenen Datenfolge und der Datenfolge von dem anderen Sender durchgeführt werden.

Vorzugsweise wird die von Nachbarstationen verwendete Verschiebung bzw. Verwürfelung der Mobilstation mitgeteilt. Diese kann entweder durch eine explizite Signalisierung erfolgen, oder wird implizit durch eine andere Kenngröße, z.B. die Zellenidentifikation ID übermittelt werden. Beispielsweise kann die verwendete Verschiebung berechnet werden aus der Zell ID modulo einem Maximalverschiebungswert, bzw. die Nummer der zur Verwürfelung angewandten Permutation kann berechnet werden aus der Zell ID modulo der Anzahl der verwendeten Permutationen.

Falls die Sender allerdings nicht synchronisiert sind, werden bevorzugt keine rein zyklischen Vertauschungen vorgenommen, da so nicht verhindert werden kann, dass bei einer beliebig zufälligelligen Zeitverschiebung zwischen zwei Sendern nicht der Fall auftritt, dass von beiden Sendern die gleichen Daten zur gleichen Zeit übertragen werden. Hier ist eine insbesondere zufällige Permutation möglichst kleiner Datenteilbereiche vornehmbar; so dass wiederum der für die Umsortierung in der Empfangseinrichtung benötigte Speicher gering ist.

Bevorzugt wird insbesondere ein solches Verfahren, bei dem ein Versatz eines Datenelements oder Datenblocks der Daten beim Aussenden über den zweiten Sender gegenüber dem Aussenden dieses Datenelements oder Datenblocks über den ersten Sender zumindest der doppelten Dauer der Empfangslücke entspricht.

Bevorzugt werden insbesondere ein solches Verfahren, ein solcher Empfänger oder solche Mobilfunksystemeinrichtungen zum Durchführen eines Empfangsverfahrens im UMTS-Kompressionsmodus-Verfahren bei Empfang kontinuierlich und ohne Berücksichtigung des Kompressionsmodus gesendeter Daten.

Bevorzugt werden insbesondere ein solches Verfahren, eine solche Empfängereinrichtung oder eine solche Mobilfunksystemeinrichtung, wobei der erste und der zweite Sender zwei Sektorsender einer einzigen Sendestation sind.

Bevorzugt wird insbesondere ein solches Verfahren, eine solche Empfängereinrichtung oder eine solche Mobilfunksystemeinrichtung, wenn der Versatz eine zeitnahe Rekonstruktion ermöglicht, insbesondere eine Rahmendauer nicht überschreitet.

Entweder ist der Versatz Null hinsichtlich z. B. Sektoren einer Zelle oder völlig beliebig. Die zyklische Vertauschung bezieht sich nicht auf den gesamten Datenstrom, sondern nur auf Teile, insbesondere möglichst kleine Teile.

Ein Ausführungsbeispiel wird nachfolgend anhand der Zeichnung näher erläutert. Es zeigen:
- Fig. 1: schematisch miteinander kommunizierende Stationen eines Mobilfunksystems;
- Fig. 2: eine Datenstruktur einer komprimierten Betriebsart gemäß dem Stand der Technik;
- Fig. 3: Empfangsstrukturen eines Empfängers im Falle einer Messung in komprimierter Betriebsart und Anwendung der komprimierten Betriebsart auf fortlaufend konti- nuierlich gesendete Daten; und
- Fig. 4: ein Empfangsdatenschema im Fall einer zellulären FACH-Empfangsbetriebsart.

Bevorzugt wird ein selektiv kombinierender Empfang (SC: Selective Combining) durch eine Teilnehmerstation UE. Dazu wird der gleiche Dateninhalt, d. h. die gleichen Daten oder Datenpakete, in benachbarten Sektoren und/oder Zellen von mehr als einer Basisstation zu einer Teilnehmerstation gesendet. Dabei werden keine Beschränkungen hinsichtlich der Synchronisierung der Daten selber auferlegt. In bekannter Art und Weise führt die Teilnehmerstation in beispielsweise der komprimierten Betriebsart gemäß UMTS Interfrequenz- oder Inter-RAT-Messungen durch und kann nicht alle Daten auf einem MBMS-Kanal empfangen. Jedoch werden die Daten, welche während der Messlücken bzw. Empfangslücken gesendet und nicht empfangen wurden, rekonstruiert. Neben der Möglichkeit einer für sich bekannten Vorwärts-Fehlerkorrektur (FEC) erfolgt dies dadurch, dass die Daten bzw. Datenpakete in benachbarten und sich überlappenden Sektoren und/oder Zellen mit einem Versatz oder zu zueinander verwürfelten Zeiten gesendet werden. Dadurch kann die Teilnehmerstation während einer Empfangslücke nicht empfangene Daten über dieselbe Ressource zu einem versetzten Zeitpunkt von einer benachbarten Zelle oder von einem benachbarten Sektor empfangen und zur Rekonstruktion verwenden.

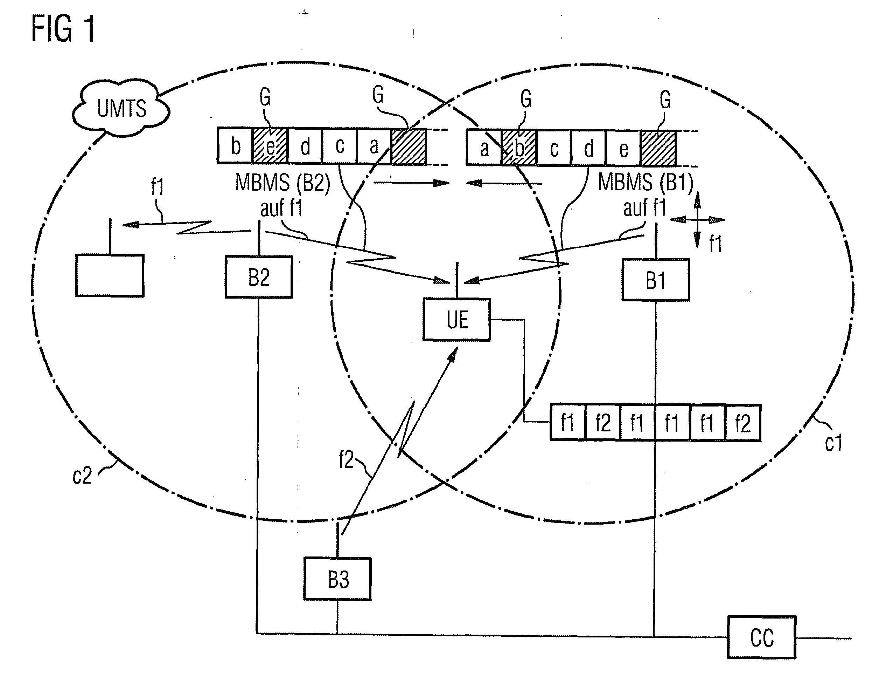

Fig. 1 zeigt schematisch eine Anordnung verschiedener Einrichtungen eines Mobilfunksystems, beispielsweise gemäß UMTS, sowie darin zwischen Stationen übertragene Daten. Eine Übertragung auf andere Mobilfunksysteme und ggf. andere Betriebsarten mit vergleichbarer Problematik ist jedoch prinzipiell möglich. Insbesondere ist auch neben dem Einsatz zweier getrennter Basisstationen B1, B2 mit jeweils einer eigenen Zelle c1 bzw. c2 der Einsatz einer einzigen Basisstation mit einer Sektor-Antennen-Anordnung und Sektorzellen möglich.

Im Einzelnen dargestellt sind beispielhaft drei Basisstationen als Sender B1, B2, B3. Diese sind mit einer zentralen Steuereinrichtung CC verbunden und werden hinsichtlich der Aussendung von Daten und des Aufbaus von Kommunikationsverbindungen zentral gesteuert. In UMTS können diese zentralen Steuereinrichtungen die sog. RNC (Radio Network Controller) sein.

Eine Teilnehmerstation dient als Empfänger UE und befindet sich im Überlappungsbereich der Zellen c1 und c2 des ersten bzw. des zweiten Senders B1, B2. Eine dedizierte Verbindung besteht zwischen dem Empfänger UE und dem ersten Sender B1. Der Empfänger UE befindet sich in einer Betriebsart, in welcher überwiegend Daten auf einer ersten Frequenz als einem ersten Ressourcenelement f1 der Ressource Frequenz des FDD-Verfahrens von dem ersten Sender B1 empfängt. Zwischenzeitlich schaltet der Empfänger UE für kurze Zeitmomente auf ein zweites Ressourcenelement f2, d. h. auf eine zweite Frequenz, um dort Messungen durchzuführen. Während dieser Zeitdauer können keine Daten b einer Folge von Daten a, b, c, d, e empfangen werden, welche über die erste Frequenz f1 von dem ersten Sender B1 ausgesendet werden. Bei der Folge von Daten a - e handelt es sich um Datenelemente oder Datenblöcke, welche von dem ersten Sender B1 über einen Rundfunkkanal mit der ersten Frequenz als Ressourcenelement f1 an eine Vielzahl von teilnehmerseitigen Empfängern UE übertragen werden sollen. Der Empfänger UE ist somit beispielsweise eine Teilnehmerstation in der komprimierten Betriebsart des UMTS, welche MBMS-Daten von dem ersten Sender B1 empfängt.

Der Empfänger UE befindet sich außerdem innerhalb der Funkreichweite des zweiten Senders B2. Der zweite Sender B2 sendet dieselben Daten der Folge von Daten a - e an Empfänger UE im Bereich seiner Zelle c2. Um die Empfangslücken bei dem Empfänger UE durch dessen Betrieb in der komprimierten Betriebsart ausgleichen zu können, sendet der zweite Sender B2 auf dem vorzugsweise selben Ressourcenelement f1, d. h. derselben ersten Frequenz, diese Daten der Folge von Daten a - e zeitlich versetzt, z. B. verwürfelt, zu der entsprechenden Aussendung durch den ersten Sender B1. Dadurch besteht eine hohe Wahrscheinlichkeit, dass der Empfänger UE die fehlenden Daten b auf Grund der zeitlichen Verwürfelung von dem zweiten Sender B2 empfangen kann.

Die Verwürfelung kann auf verschiedene Art und Weise bewirkt werden. Neben einer zeitlich verschobenen Aussendung der einzelnen Datenelemente oder Datenblöcke der Folge von Daten a - e zu einem verschiedenen Zeitpunkt durch die beiden Sender B1, B2 kann auch eine Vertauschung der Reihenfolge beim Aussenden der einzelnen Datenelemente bzw. Datenblöcke der Folge von Daten a - e vorgenommen werden. Eine solche Vertauschung kann zyklisch oder zufällig durchgeführt werden.

Bei der Auswahl des Versatzes zum versetzten Aussenden der Daten durch den zweiten Sender B2 wird vorzugsweise die Dauer der Empfangslücke berücksichtigt. Der Versatz wird entsprechend größer gewählt als die Dauer einer Empfangslücke. Besonders bevorzugt wird ein Versatz von mindestens dem doppelten der Empfangslücke.

In einer weiteren Ausgestaltung wird der Versatz mindestens so groß gewählt, wie es der Summe aus der Empfangslücke und der aktuellen oder maximalen Zeitverschiebung zwischen zwei benachbarten Sendern entspricht. Dann ist sichergestellt, dass eine Empfangslücke den Empfang eines Datenpaketes nicht von beiden Sendern beeinträchtigen kann.

Vorteilhaft ist ein solcher Ansatz auch mit Blick auf die Probleme des Sendeleistungsverbrauchs seitens der Sender B1, B2 beim versenden von Daten einer Folge von Daten a - e über MBMS-Kanäle, um die erforderliche Leistung zu reduzieren. Auch dies wird durch die selektive Auswahl von Daten verschiedener Sender seitens des Empfängers UE vorteilhaft ermöglicht. Vom Netz, beispielsweise der zentralen Steuereinrichtung CC, wird die Übertragung der Folge von Daten a - e für die verschiedenen benachbarten und sich überlappenden Sektoren bzw. Zellen c1, c2 hinsichtlich des Inhalts bei MBMS koordiniert. Die Synchronisierungsanforderungen für das derart durchzuführende selektive Kombinieren sind jedoch im Vergleich zu der Maximalverhältniskombinierung (Maximum Ratio Combining) in dem Bereich zumindest einiger TTIs nicht sehr streng.

Im Falle einer abgestimmten, bzw. synchronen Aussendung, z.B. innerhalb der Sektoren einer Zelle, wird durch ein Vertauschen der zu sendenden Daten in Art einer paarweisen Permutation die Rekonstruierbarkeit seitens des Empfängers UE vorteilhaft erhöht. Im Fall einer solchen paarweisen Permutation wird vom ersten Sender beispielsweise die Folge {a, b, c, d, e, f} ausgesendet, während der zweite Sender B2 die paarweise permutierte Folge {b, a, d, c, f, e} aussendet. Dies bietet den Vorteil, dass nur eine sehr geringe Datenpufferung für die Umordnung seitens eines Empfängers erforderlich ist, welcher regulär die Daten des zweiten Senders B2 empfängt und daher alle empfangenen Daten umordnen muss. Diese paarweise Permutation bietet bereits bei zeitgleichem Aussenden eines Rahmens mit einer Vielzahl solcher Datenelemente bzw. durch den anderen Sender eines Rahmens mit diesen Daten, dies jedoch paarweise permutiert, eine hohe Sicherheit gegen den Verlust eines Datenelements oder Datenblocks auf dem gleichen S-CCPCH MBMS TTI während einer Interfrequenz- oder Inter-RAT-Messung.

Falls die Sender B1, B2 hinsichtlich der Aussendezeitpunkte zeitlich nicht abgestimmt sind, ist eine zufällige Permutation der Datenelemente vorteilhaft. Diese stellt sicher dass in jedem Fall eine Datenrekonstruktion der Sender B1, B2 und einer Länge von 1 MBMS S-CCPCH TTI ermöglicht wird, wenn die selektive Kombinierung beim Aussenden der derart versetzten Daten über zwei Sender B1, B2 empfangen wird. Beispielsweise kann eine Permutation verwendet werden, wobei die permutierte Sequenz bzw. Folge durch den zweiten Sender B2 ausgesendet wird. Die Permutation wird unter Verwendung der Folge des ersten Senders B1 durchgeführt, wobei jeweils vier oder mehr Datenelemente oder Datenblöcke untereinander permutiert werden. Datenelement 1 wird auf Position 3 verschoben, Datenelement 2 auf Position 4, Datenelement 3 auf Position 1 und Datenelement 4 auf Position 2. Um zyklisches Verhalten aufzubrechen permutiert man Elemente zusätzlich zwischen den beschriebenen Gruppen mit vier oder mehr Datenelementen.

Die Verwürfelung oder Permutation der Datenelemente oder die Verzögerung für die einzelnen Sendern kann durch die einzelnen Sender (oder ihnen zugeordnete Komponenten) durchgeführt werden. Sie kann aber auch zentral durch eine zentralen Steuereinrichtung CC (beispielsweise RNC) für alle durch diese Steuereinrichtung kontrollierten Sender durchgeführt werden. Letzteres hat den Vorteil, dass diese Funktion nur in vergleichsweise wenigen Netzelementen implementiert werden muss, insbesondere muss auch nur in diesen Elementen der für die Verwürfelung bzw. Permutation oder Verzögerung notwendige Speicher vorgehalten werden.

In einem weiteren Ausführungsbeispiel kann man auch einen Satz von Sequenzreihenfolgen (Permutationen) vorgeben. Zu jedem Zeitpunkt erhält jede Basisstation eine Sequenzreihenfolge aus diesem Satz zugeteilt, wobei die Sequenzreihenfolgen regelmäßig geändert werden. Vorteilhafter Weise werden die Sequenzreihenfolgen zufällig gewählt oder pseudo-zufällig d.h. unter Verwendung eines Pseudozufallszahlenalgorithmus welcher die Auswahl deterministisch in Abhängigkeit von gewissen Parametern, beispielsweise der Zellen ID und der aktuellen Rahmennummer auswählt. Dadurch, dass benachbarte Zellen zufällig Sequenzreihenfolgen auswählen, ist sichergestellt, dass unabhängig von dem zeitlichen Versatz der Aussendungen eine minimale Wahrscheinlichkeit sichergestellt ist, dass die Aussendungen eines Datenpaketes von den beiden Zellen für die Rekonstruierung genutzt werden können. Die Wahrscheinlichkeit hängt dabei von der Anzahl der Sequenzreihenfolgen ab (zumindest sofern die Sequenzreihenfolgen geeignet gewählt werden, wie weiter unten auch beschrieben). Bei beispielsweise 4 Sequenzreihenfolgen beträt die minimale Wahrscheinlichkeit 75% (da nur in einem Viertel der Fälle Sequenzreihenfolgen gewählt werden, die zu einem gleichzeitigen Aussenden des betreffenden Datenpaketes führen). Dieses Verfahren führt somit zu einer statistischen Mittelung der Kollisionen und verhindert insbesondere, dass solche an bestimmten Orten permanent auftreten.

Dieses Ausführungsbeispiel hat den Vorteil, dass die Zellen nicht zeitlich synchronisiert werden müssen und dass auch keine koordinierte Planung für die zuweisung der Sequenzreihenfolgen durchgeführt werden muss.

Typischerweise sind in einem Netzwerk einzelne Zellen synchronisiert, z.B. Sektoren die von einem gemeinsamen Standort aus abgestrahlt werden, wohingegen andere unsynchronisiert sind, z.B. Sektoren an anderen Standorten. Auch in diesem Fall lässt sich das Verfahren vorteilhaft einsetzen: Für die synchronisierten Zellen wird ein gemeinsamer (pseudo-) Zufallszahlengenerator verwendet, zu dem von diesem gelieferten Wert wird dann ein Zell-spezifischer Offset Wert addiert, wobei der Wertebereich des Zufallszahlengenerators gleich der Anzahl der Sequenzreihenfolgen ist und die Addition mit dem Offset Wert modulo der Anzahl der Sequenzreihenfolgen durchgeführt wird. Die Offset Werte müssen dabei so zugewiesen werden, dass benachbarte Zellen unterschiedliche Offset Werte erhalten. Da aber im angesprochenen Szenario die Anzahl der synchronisierten Zellen typischer Weise klein ist, insbesondere viel kleiner als die Gesamtzahl der Zellen des Netzes, ist diese Zuweisung leicht und lokal planbar. Eine Planung bzgl. der nicht synchronisierten Zellen, insbesondere eine netzweite Planung ist nicht notwendig. Damit ist sichergestellt, dass benachbarte synchronisierte Zellen immer unterschiedliche Sequenzreihenfolgen verwenden und gleichzeitig bei benachbarten nicht synchronisierten Zellen ein statistischer Mittelungseffekt wie oben beschrieben auftritt.

In einem realistischen System gibt es üblicherweise mehr Zellen c1, c2 als von zwei Sendern B1, B2 bzw. Sektoren. Um sicherzustellen, dass die benachbarten Zellen in einem solchen Fall verschiedene Verwürfelungen bzw. Permutationen aufweisen werden mindestens vier Sequenzreihenfolgen verwendet. Nach dem bekannten Vier-Farben Theorem lässt sich jede Landkarte mit vier Farben so färben, dass benachbarte Gebiete unterschiedlich gefärbt sind, das bedeutet dass man auch den Zellen so Sequenzreihenfolgen zuweisen kann, dass benachbarte Zellen immer unterschiedliche Sequenzreihenfolgen verwenden. Damit ist sichergestellt, dass jede Teilnehmerstation UE, welche zwei solche benachbarten Zellen empfängt, fehlende Daten rekonstruieren kann.

Ein solcher Satz von 4 Sequenzreihenfolgen mit 4 Elementen ist beispielsweise der folgende Satz (Sequenzreihenfolgensatz 1) :
{a,b,c,d},
{d,a,b,c},
{c,d,a,b},
{b,c,d,a}

Man sieht, dass die Elemente a bis d je einmal pro Zeile und Spalte auftreten. Dies ist notwendig, da von jeder Zelle jedes Datenpaket genau einmal gesendet werden muss (Zeile) und da zu jedem Zeitpunkt das Datenpaket von genau einer Zelle gesendet wird, damit eine UE, welche zwei Zellen empfängt aber zu einem Zeitpunkt nicht empfangen kann, garantiert das Datenpaket nochmals empfangen kann. Sollte der minimale Abstand zwischen den Aussendungen der Datenpakete über die verschiedenen Zellen größer sein müssen, damit ein Empfang garantiert werden kann, so reicht das Kriterium dass jedes Element nur genau einmal pro Spalte auftritt nicht aus. Somit ist klar, dass ein Satz von Sequenzreihenfolgen der Länge 4 maximal 4 Sequenzreihenfolgen enthalten kann (allgemeiner kann ein Satz von Sequenzreihenfolgen der Länge n, wobei der Abstand zwischen den Aussendungen der Datenpakete über die verschiedenen Zellen größer sein muss als m maximal n/m Sequenzreihenfolgen enthalten).

Dieser spezielle Satz von Sequenzreihenfolgen hat die Eigenschaft, dass die Sequenzreihenfolgen zueinander zyklisch vertauscht sind. Wie bereits beschrieben kann man durch zyklische Vertauschung in einfacher Weise Sätze von Sequenzreihenfolge beliebiger Länge erzeugen. Die maximale Anzahl der möglichen Sequenzreihenfolgen pro Satz hängt ab von der Länge der Sequenzreihenfolgen und dem minimalen Abstand zwischen den Aussendungen eines Datenpakets auf den verschiedenen Zellen. Durch geeignete Wahl dieser Parameter lässt sich so immer ein passender Satz finden.

Ein weiterer Satz von 4 Sequenzreihenfolgen mit 4 Elementen ist der folgende Satz (Sequenzreihenfolgensatz 2):
{a,b,c,d},
{b,a,d,c},
{c,d,a,b},
{d,c,b,a}

Dieser Satz zeichnet sich dadurch aus, dass die zweite Folge die paarweise Permutierung der ersten Folge ist, und die vierte Folge die paarweise Permutierung der dritten Folge ist. Wie bereits gezeigt haben paarweise permutierte Folgen den Vorteil, dass nur eine sehr geringe Datenpufferung notwendig ist. Es ist allerdings nicht möglich, einen Satz von mehr als zwei Folgen zu bilden, wobei alle Folgen untereinander paarweise permutierte Folgen sind. Insofern ist der Sequenzreihenfolgensatz 2 insofern optimal, als er wenigstens zwei Paare von paarweise permutierten Folgen enthält.

Dieser Satz lässt sich auch durch folgendes Bildungsgesetz beschreiben:
Beginne mit zwei paarweise permutieren Folgen der Länge 2:
{a,b},
{b,a}
Setze die Folgen analog fort, dadurch entstehen zwei paarweise permutierte Folgen der Länge 4 (für die Fortsetzung werden andere Buchstaben verwendet also statt a wird c und statt b wird d verwendet, um eindeutige Bezeichnungen zu erhalten):
{a,b,c,d},
{b,a,d,c}

Füge weitere Folgen an, wobei die angefügten Folgen aus den vorhandenen Folgen dadurch gebildet werden, dass die erste und zweite Hälfte vertauscht werden (dabei entsteht aus {a,b,c,d} die Folge {c,d,a,b} da die Hälften "a,b" und "c,d" vertauscht werden), das ergibt den Sequenzreihenfolgensatz 2) :
{a,b,c,d},
{b,a,d,c},
{c,d,a,b},
{d,c,b,a}

Mit diesem Bildungsgesetz lassen sich Sätze von Sequenzreihenfolgen deren Länge eine zweierpotenz ist generieren, z.B. als nächstes der Satz der Länge 8:
{a,b,c,d,e,f,g,h},
{b,a,d,c,f,e,h,g},
{c,d,a,b,g,h, e, f},
{d,c,b,a,h,g,f,e},
{e.f,g,h,a,b,c,d},
{f,e,h,g,b,a,d,c},
{g,h,e,f,c,d,a,b},
{h,g,f,e,d,c,b,a}

Ein weiterer Satz von 4 Sequenzreihenfolgen mit 4 Elementen, welcher ebenfalls zwei Paare von paarweise permutierten Folgen enthält (und der somit ebenfalls optimal im o.g. Sinne ist) ist der folgende Satz (dieser Satz ist allerdings etwas weniger "schön" da nicht so symmetrisch) (Sequenzreihenfolgensatz 3):
{a,b,c,d},
{b,a,d,c},
{d,c,a,b},
{c,d,b,a}

Sieht man von Umbenennungen der Elementen und Zeilenvertauschungen ab, so gibt es insgesamt nur vier Sätze von 4 Sequenzreihenfolgen mit 4 Elementen, der noch fehlende Satz ist (Sequenzreihenfolgensatz 4):
{a,b,c,d},
(c,a,d,b},
{b,d,a,c},
{d,c,b,a}

Alle diese vier Sätze lassen sich vorzugsweise in Mobilfunksystemen verwenden, wobei der Sequenzreihenfolgensatz 2 als Paar von paarweise vertauschten Folgen und durch das symmetrische Bildungsgesetze besonders ausgezeichnet ist, der Sequenzreihenfolgensatz 3 aber (abgesehen vom Bildungsgesetz, welches aber für die Leistungsfähigkeit nur eine untergeordnete Bedeutung hat) gleichwertig ist.

## Patentansprüche

1. Verfahren zum Empfangen von in einer Folge ({a, b, c, d, e}) von einem ersten Sender (B1) eines Mobilfunksystems auf einem ersten Ressourcenelement einer Ressource gesendeten Daten (a - e) durch einen Empfänger, wobei beim Empfangen Empfangslücken (G) entstehen und während der Empfangslücken (G) nicht empfangene Daten (b) durch den Empfänger rekonstruiert werden,
**dadurch gekennzeichnet , dass**
die von dem ersten Sender (B1) nicht empfangenen Daten (b) zeitlich versetzt oder verwürfelt von einem zweiten Sender (B2) auf dem gleichen Ressourcenelement (f1) der Ressource zwischen den Empfangslücken (G) empfangen und zum Rekonstruieren der Folge aus Daten (a - e) verwendet werden.

2. Verfahren zum Senden einer Folge von Daten ({a, b, c, d, e} von einem Sender (B1) zu zumindest einem Empfänger in einem Mobilfunksystem über ein Ressourcenelement einer Ressource, wobei das Mobilfunksystem einen zweiten Sender (B2) mit überlappendem Sendebereich (c2) zum Sendebereich (c1) des ersten Senders (B1) aufweist,
**dadurch gekennzeichnet, dass**
die Daten (a - e) auf dem selben Ressourcenelement von dem zweiten Sender (B2) mit einem Versatz zeitlich versetzt oder verwürfelt zu deren Aussenden über den ersten Sender (B1) derart durchgeführt wird, dass empfängerseitig durch beim Empfang der Daten (a - e) von dem ersten Sender (B1) entstandene Empfangslücken (G) nicht empfangene Daten (b) zwischen den Empfangslücken empfangen und rekonstruiert werden können.

3. Verfahren nach Anspruch 1 oder 2, bei dem als das Ressourcenelement eine Sende- und Empfangsfrequenz (f1) verwendet wird, insbesondere eine Frequenz eines FDD- oder FDMA- Mobilfunksystems.

4. Verfahren nach einem vorstehenden Anspruch, bei dem empfängerseitig die Empfangslücken (G) durch einen zeitweiligen Wechsel des Ressourcenelements zu einem anderen Ressourcenelement der Ressource entstehen.

5. Verfahren nach einem vorstehenden Anspruch, bei dem das Mobilfunksystem ein Kommunikationssystem mit dem Ressourcenelement zum Senden der Folge von Daten ({a, b, c, d, e}) über eine Zeitdauer ist und der zumindest eine Empfänger den Empfang während der Zeitdauer zeitweilig für einen Empfang auf einem anderen Ressourcenelement unterbricht und die Empfangslücken (G) **dadurch** verursacht.

6. Verfahren nach einem vorstehenden Anspruch, bei dem die Reihenfolge der Daten ({b, e, d, c, a}), insbesondere Datenblöcke, beim Aussenden durch den zweiten Sender (B2) gegenüber der Reihenfolge der Daten ({a, b, c, d, e}) beim Aussenden über den ersten Sender (b1) jeweils innerhalb von Datenblöcken mit einer begrenzten Anzahl von Elementen vertauscht wird.

7. **Verfahren nach Anspruch 6,** bei dem die begrenzte Anzahl von Elementen über die vertauscht wird 4 ist und jeweils ein Satz von maximal vier Sequenzreihenfolgen im Mobilfunksystem verwendet wird.

8. Verfahren nach Anspruch 7 mit folgendem Satz von vier Sequenzreihenfolgen:
{a,b,c,d},{b,a,d,c},{c,d,a,b},{d,c,b,a}

9. Verfahren nach Anspruch 7 mit folgendem Satz von vier Sequenzreihenfolgen:
{a,b,c,d}, {b,a,d,c}, {d,c,a,b}, {c,d,b,a}

10. Verfahren nach Anspruch 7 mit folgendem Satz von vier Sequenzreihenfolgen:
{a,b,c,d},{c,a,d,b}, {b,d,a,c}, {d,c,b,a}

11. Verfahren nach Anspruch 7 mit folgendem Satz von vier Sequenzreihenfolgen:
{a,b,c,d}, {d,a,b,c}, {c,d,a,b}, {b,c,d,a}

12. Verfahren nach einem der vorherigen Ansprüche, bei dem ein Versatz eines Datenelements oder Datenblocks der Daten beim Aussenden über den zweiten Sender (B2) gegenüber dem Aussenden dieses Datenelements oder Datenblocks über den ersten Sender (B1) zumindest der doppelten Dauer der Empfangslücke (G) entspricht.

13. Verfahren nach einem der Ansprüche 1-11, bei dem ein Versatz eines Datenelements oder Datenblocks der Daten beim Aussenden über den zweiten Sender (B2) gegenüber dem Aussenden dieses Datenelements oder Datenblocks über den ersten Sender (B1) zumindest der Summe der Dauer der Empfangslücke (G) und der aktuellen oder maximalen Zeitverschiebung zwischen zwei benachbarten Sendern entspricht.

14. Empfänger für ein Mobilfunksystem mit einer Empfängereinrichtung zum Empfangen einer Folge von Daten ({a, b, c, d, e}) eines Senders (B1) auf einem Ressourcenelement einer Ressource, wobei die Empfängereinrichtung zeitweilig den Empfang auf dem Ressourcenelement zum zeitweiligen Wechsel des Ressourcenelements unterbricht, wodurch Empfangslücken (G) entstehen,
**dadurch gekennzeichnet, dass**
während einer Empfangslücken (G) nicht empfangene Daten (b) zeitlich versetzt von einem zweiten Sender (B2) empfangen und zum Rekonstruieren der Folge von Daten (a - e) verarbeitet werden.

15. Mobilfunksystemeinrichtungen eines Mobilfunksystems mit zumindest zwei Sendern (B1, B2) mit zumindest teilweise überlappenden Sendebereichen (c1 c2), wobei die Sender (B1, B2) eine Folge von Daten ({a, b, c, d, e}) aussenden,
**dadurch gekennzeichnet, dass**
die Sender ausgestaltet sind, zum Aussenden der Daten jeweils das gleiche Ressourcenelement einer Ressource zu verwenden, wobei der eine Sender (B2) der Sender (B1, B2) ausgestaltet ist, einzelne Datenelemente (b) oder Datenblöcke der Daten (a - e) jeweils versetzt zu einem entsprechenden Datenelement oder Datenblock auf dem anderen Sender (B1) derart auszusenden, dass empfängerseitig durch beim Empfang der Daten (a - e) von dem ersten Sender (B1) entstandene Empfangslücken (G) nicht empfangene Daten (b) zwischen den Empfangslücken empfangen und rekonstruiert werden können.

16. Verfahren nach Anspruch 1 - 13 zum Durchführen eines Empfangsverfahrens im UMTS-Kompressionsmodus-Verfahren bei Empfang kontinuierlich und ohne Berücksichtigung des Kompressionsmodus gesendeter Daten (a - e).

17. Verfahren nach einem der Ansprüche 1 - 13, wobei der erste und der zweite Sender (B1, B2) zwei Sektorsender einer einzigen Sendestation sind.

18. Verfahren nach einem der Ansprüche 1 - 13, wobei der Versatz eine zeitnahe Rekonstruktion ermöglicht, insbesondere eine Rahmendauer nicht überschreitet.

19. Empfänger nach Anspruch 14 zum Durchführen eines Empfangsverfahrens im UMTS-Kompressionsmodus-Verfahren bei Empfang kontinuierlich und ohne Berücksichtigung des Kompressionsmodus gesendeter Daten (a - e).

20. Empfänger nach Anspruch 14, wobei der erste und der zweite Sender (B1, B2) zwei Sektorsender einer einzigen Sendestation sind.

21. Empfänger nach Anspruch 14, wobei der Versatz eine zeitnahe Rekonstruktion ermöglicht, insbesondere eine Rahmendauer nicht über- schreitet.

22. Mobilfunksystemeinrichtungen nach Anspruch 15 zum Durchführen eines Empfangsverfahrens im UMTS-Kompressionsmodus-Verfahren bei Empfang kontinuierlich und ohne Berücksichtigung des Kompressionsmodus gesendeter Daten (a - e).

23. Mobilfunksystemeinrichtung nach Anspruch 15, wobei der erste und der zweite Sender (B1, B2) zwei Sektorsender einer einzigen Sendestation sind.

24. Mobilfunksystemeinrichtung nach Anspruch 15, wobei der Versatz eine zeitnahe Rekonstruktion ermöglicht, insbesondere eine Rahmendauer nicht über- schreitet.

## Claims

1. Method for receiving, by means of a receiver, data (a - e) sent in a sequence ({a, b, c, d, e}) by a first transmitter (B1) of a mobile radio system on a first resource element of a resource, reception gaps (G) resulting during the reception and data (b) not received during said reception gaps (G) being reconstructed by the receiver (UE),
**characterised in that**
the data (b) not received from the first transmitter (B1) is received with a time offset or in scrambled form from a second transmitter (B2) on the same resource element (f1) of the resource between the reception gaps (G) and used for reconstructing the sequence of data (a - e).

2. Method for sending a sequence of data ({a, b, c, d, e}) from a transmitter (B1) to at least one receiver in a mobile radio system via a resource element of a resource, the mobile radio system having a second transmitter (B2) with a transmitting area (c2) overlapping the transmitting area (c1) of the first transmitter (B1),
**characterised in that**
the data (a - e) is sent on the same resource element by the second transmitter (B2) with a time offset or in scrambled form with respect to its transmission via the first transmitter (B1) in such a way that data (b) not received on the receiver side as a result of reception gaps produced during reception of the data (a - e) from the first transmitter (B1) cam be received and reconstructed between the reception gaps.

3. Method according to claim 1 or 2, wherein a transmit and receive frequency (f1) is used as the resource element, in particular a frequency of an FDD or FDMA mobile radio system.

4. Method according to a preceding claim, wherein the reception gaps (G) on the receiver side are produced as a result of a temporary changeover of the resource element to another resource element of the resource.

5. Method according to a preceding claim, wherein the mobile radio system is a communication system with the resource element for sending the sequence of data ({a, b, c, d, e}) over a period of time and the at least one receiver temporarily interrupts the reception during the period of time for the purpose of receiving on another resource element and thereby causes the reception gaps (G).

6. Method according to a preceding claim, wherein the order of the data ({b, e, d, c, a}), in particular data blocks, is transposed during the transmission by the second transmitter (B2) with respect to the order of the data ({a, b, c, d, e}) during the transmission via the first transmitter (b1) in each case within data blocks with a limited number of elements.

7. Method according to claim 6, wherein the limited number of elements via which the transposition is performed is four and in each case a set of no more than four sequence orders is used in the mobile radio system.

8. Method according to claim 7 with the following set of four sequence orders:
{a,b,c,d}, {b,a,d,c}, {c,d,a,b}, {d,c,b,a}

9. Method according to claim 7 with the following set of four sequence orders:
{a,b,c,d}, {b,a,d,c}, {d,c,a,b}, {c,d,b,a}

10. Method according to claim 7 with the following set of four sequence orders:
{a,b,c,d}, {c,a,d,b}, {b,d,a,c}, {d,c,b,a}

11. Method according to claim 7 with the following set of four sequence orders:
{a,b,c,d}, {d,a,b,c}, {c,d,a,b}, {b,c,d,a}

12. Method according to one of the preceding claims, wherein an offset of a data element or data block of the data during the transmission via the second transmitter (B2) with respect to the transmission of said data element or data block via the first transmitter (B1) corresponds to at least twice the duration of the reception gap (G).

13. Method according to one of claims 1-11, wherein an offset of a data element or data block of the data during the transmission via the second transmitter (B2) with respect to the transmission of said data element or data block via the first transmitter (B1) corresponds to at least the sum of the duration of the reception gap (G) and the current or maximum time shift between two adjacent transmitters.

14. Receiver for a mobile radio system having a receiver device for receiving a sequence of data ({a, b, c, d, e}) of a transmitter (B1) on a resource element of a resource, the receiver device temporarily interrupting the reception on the resource element for the purpose of temporarily changing over the resource element, as a result of which reception gaps (G) are produced,
**characterised in that**
data (b) not received during a reception gap (G) is received with a time offset from a second transmitter (B2) and processed for the purpose of reconstructing the sequence of data (a - e).

15. Mobile radio system devices of a mobile radio system having at least two transmitters (B1, B2) with at least partially overlapping transmitting areas (c1, c2), the transmitters (B1, B2) transmitting a sequence of data ({a, b, c, d, e}),
**characterised in that**
the transmitters are embodied to use the same resource element (f1) of a resource in each case for transmitting the data, one transmitter (B2) of the transmitters (B1, B2) being embodied to transmit individual data elements (b) or data blocks of the data (a - e) in each case with an offset with respect to a corresponding data element or data block on the other transmitter (B1) such that data (b) not received on the receiver side as a result of reception gaps produced during reception of the data (a-e) from the first transmitter (B1) can be received and reconstructed between the reception gaps.

16. Method according to claim 1 - 13, for performing a reception method in the UMTS compression mode method during reception of data (a - e) sent continuously and without taking the compression mode into account.

17. Method according to one of claims 1 - 13, wherein the first and the second transmitter (B1, B2) are two sector transmitters of a single transmitting station.

18. Method according to one of claims 1 - 13, wherein the offset enables a timely reconstruction, in particular does not exceed the duration of one frame.

19. Receiver according to claim 14, for performing a reception method in the UMTS compression mode method during reception of data (a - e) sent continuously and without taking the compression mode into account.

20. Receiver according to claim 14, wherein the first and the second transmitter (B1, B2) are two sector transmitters of a single transmitting station.

21. Receiver according to claim 14, wherein the offset enables a timely reconstruction, in particular does not exceed the duration of one frame.

22. Mobile radio system devices according to claim 15 for performing a reception method in the UMTS compression mode method during reception of data (a - e) sent continuously and without taking the compression mode into account.

23. Mobile radio system device according to claim 15, wherein the first and the second transmitter (B1, B2) being two sector transmitters of a single transmitting station.

24. Mobile radio system device according to claim 15, wherein the offset enables a timely reconstruction, in particular does not exceed the duration of one frame.

## Revendications

1. Procédé pour recevoir des données (a - e) envoyées dans une séquence ({a, b, c, d, e}) par un premier émetteur (B1) d'un système de téléphonie mobile sur un premier élément de ressource d'une ressource par un récepteur, des trous de réception (G) se formant lors de la réception et des données (b) non réceptionnées pendant les trous de réception (G) étant reconstituées par le récepteur,
**caractérisé en ce que** les données (b) non reçues du premier émetteur (B1) sont réceptionnées de façon décalée dans le temps ou hachée d'un second émetteur (B2) sur le même élément de ressource (f1) de la ressource entre les trous de réception (G) et sont utilisées pour la reconstitution de la séquence à partir de données (a - e).

2. Procédé pour l'émission d'une séquence de données ({a, b, c, d, e}) d'un émetteur (B1) à au moins un récepteur dans un système de téléphonie mobile au moyen d'un élément de ressource d'une ressource, le système de téléphonie mobile présentant un second émetteur (B2) avec plage d'émission (c2) de recouvrement avec la plage d'émission (c1) du premier émetteur (B1),
**caractérisé en ce que** les données (a - e) sont reçues sur le même élément de ressource par un second émetteur (B2) avec un décalage, de façon décalée dans le temps ou hachée, pour leur envoi au moyen du premier émetteur (B1) de telle sorte que, côté récepteur, des données (b) non réceptionnées à cause de trous de réception (G) formées lors de la réception des données (a - e) par le premier émetteur (B1) peuvent être reçues entre les trous de réception et reconstituées.

3. Procédé selon la revendication 1 ou 2, dans lequel une fréquence d'émission et de réception (f1), en particulier une fréquence d'un système de téléphonie mobile FDD ou FDMA, est utilisée comme l'élément de ressource.

4. Procédé selon une revendication précédente, dans lequel, côté récepteur, les trous de réception (G) sont formés à cause d'un changement temporaire de l'élément de ressource pour un autre élément de ressource de la ressource.

5. Procédé selon une revendication précédente, dans lequel le système de téléphonie mobile est un système de communication avec l'élément de ressource pour l'émission de la séquence de données ({a, b, c, d, e}) sur une durée de temps et lequel au moins un récepteur interrompt la réception pendant la durée de temps de façon temporaire pour une réception sur un autre élément de ressource et provoque ainsi les trous de réception (G).

6. Procédé selon une revendication précédente, dans lequel l'ordre de succession des données ({b, e, d, c, a}), en particulier des blocs de données, est permuté lors de l'envoi par le second émetteur (B2) par rapport à l'ordre de succession ({a, b, c, d, e}) lors de l'envoi par le premier émetteur (b1) à chaque fois à l'intérieur de blocs de données avec un nombre limité d'éléments.

7. Procédé selon la revendication 6, dans lequel le nombre limité d'éléments, par lequel on permute, est de 4 et à chaque fois un ensemble de au maximum quatre successions de séquence est utilisée dans le système de téléphonie mobile.

8. Procédé selon la revendication 7 comprenant l'ensemble suivant des quatre successions de séquence :
{a, b, c, d}, {b, a, d, c}, {c, d, a, b}, {d, c, b, a}.

9. Procédé selon la revendication 7 comprenant l'ensemble suivant de quatre successions de séquence :
{a, b, c, d}, {b, a, d, c}, {d, c, a, b}, {c, d, b, a}.

10. Procédé selon la revendication 7 comprenant l'ensemble suivant de quatre successions de séquence :
{a, b, c, d}, {c, a, d, b}, {b, d, a, c}, {d, c, b, a}.

11. Procédé selon la revendication 7 comprenant l'ensemble suivant de quatre successions de séquence :
{a, b, c, d}, {d, a, b, c}, {c, d, a, b}, {b, c, d, a}.

12. Procédé selon l'une quelconque des revendications précédentes dans lequel un décalage d'un élément de données ou d'un bloc de données des données lors de l'envoi par le second émetteur (B2) par rapport à l'envoi de cet élément de données ou bloc de données par le premier émetteur (B1) correspond au moins au double de la durée du trou de réception (G).

13. Procédé selon l'une quelconque des revendications 1 à 11, dans lequel un décalage d'un élément de données ou un bloc de données des données lors de l'envoi par le second émetteur (B2) par rapport l'envoi de cet élément de données ou bloc de données au moyen du premier émetteur (B1) correspond au moins à la somme de la durée du trou de réception (G) et du décalage de temps actuel ou maximal entre deux émetteurs voisins.

14. Récepteur pour un système de téléphonie mobile avec un dispositif récepteur pour la réception d'une séquence de données ({a, b, c, d, e}) d'un émetteur (B1) sur un élément de ressource d'une ressource, le dispositif récepteur interrompant temporairement la réception sur l'élément de ressource pour le changement temporaire de l'élément de ressource, de sorte que des trous de réception (G) se forment, **caractérisé en ce que** des données (b) non reçues pendant un trou de réception (G) sont reçues avec un décalage dans le temps d'un second émetteur (B2) et sont traitées pour la reconstitution de la séquence de données (a - e).

15. Dispositif de système de téléphonie mobile d'un système de téléphonie mobile comprenant au moins deux émetteurs (B1, B2) avec des zones d'émission (c1, c2) se chevauchant au moins partiellement, les émetteurs (B1, B2) émettant une séquence de données ({a, b, c, d, e}), **caractérisé en ce que** les émetteurs sont conçus pour utiliser à chaque fois le même élément de ressource d'une ressource pour l'envoi des données, un émetteur (B2) des émetteurs (B1, B2) étant conçu pour envoyer des éléments de données (b) individuels ou des blocs de données individuels des données (a - e) à chaque fois de façon décalée par rapport à un élément de données ou bloc de données correspondant sur l'autre émetteur (B1) de telle sorte que, côté récepteur, des données (b) non reçues à cause de trous de réception (G) formées lors de la réception des données (a - e) du premier émetteur (B1) peuvent être reçues et reconstituées entre les trous de réception.

16. Procédé selon les revendications 1 à 13 pour la mise en oeuvre d'un procédé de réception dans le procédé de mode de compression UMTS lors de la réception de façon continue et sans prise en compte du mode de compression de données (a - e) envoyées.

17. Procédé selon l'une quelconque des revendications 1 à 13, le premier et second émetteurs (B1, B2) étant deux émetteurs de secteur d'une unique station émettrice.

18. Procédé selon l'une quelconque des revendications 1 à 13, le décalage permettant une reconstitution proche dans le temps, en particulier ne dépassant pas une durée de trame.

19. Récepteur selon la revendication 14 pour la mise en oeuvre d'un procédé de réception dans le procédé de mode de compression UMTS lors de la réception de façon continue et sans prise en compte du mode de compression de données (a - e) envoyées.

20. Récepteur selon la revendication 14, le premier et le second émetteurs (B1, B2) étant deux émetteurs de secteur d'une unique station émettrice.

21. Récepteur selon la revendication 14, le décalage permettant une reconstitution proche dans le temps, en particulier ne dépassant pas une durée de trame.

22. Dispositifs de système de téléphonie mobile selon la revendication 15 pour la mise en oeuvre d'un procédé de réception dans le procédé de mode de compression UMTS lors de la réception de façon continue et sans prise en compte du mode de compression de données (a - e) envoyées.

23. Dispositif de système de téléphonie mobile selon la revendication 15, le premier et le second émetteurs (B1, B2) étant deux émetteurs de secteur d'une unique station émettrice.

24. Dispositif de système de téléphonie mobile selon la revendication 15, le décalage permettant une reconstitution proche dans le temps, en particulier ne dépassant pas une durée de trame.
